# EUROPÄISCHE PATENTSCHRIFT

(11) **EP 2 720 853 B1**
(45) Veröffentlichungstag und Bekanntmachung des Hinweises auf die Patenterteilung: **10.02.2016**
(21) Anmeldenummer: 12734796.1
(22) Anmeldetag: 14.06.2012
(51) Int. Cl.: B29C 67/00

(54) **VORRICHTUNG UND VERFAHREN ZUR HERSTELLUNG EINES DREIDIMENSIONALEN GEGENSTANDES**
DEVICE AND METHOD FOR THE PRODUCTION OF A THREE-DIMENSIONAL OBJECT
DISPOSITIF ET PROCÉDÉ DE PRODUCTION D'UN OBJET TRIDIMENSIONNEL

(30) Priorität: 16.06.2011 DE 102011106614
(43) Veröffentlichungstag der Anmeldung: 23.04.2014
(73) Patentinhaber: Arburg GmbH + Co KG, 72290 Lossburg (DE)
(72) Erfinder: KRAIBÜHLER, Herbert, 72290 Lossburg (DE); DUFFNER, Eberhardt, 72181 Starzach (DE)
(74) Vertreter: Reinhardt, Harry
(86) Internationale Anmeldenummer: PCT/EP2012/002513
(87) Internationale Veröffentlichungsnummer: WO 2012/171644

(56) Entgegenhaltungen:
- WO-A1-2011/011818
- US-A- 4 665 492
- US-B1- 7 168 935

## Beschreibung

Die Erfindung betrifft eine Vorrichtung und ein Verfahren zur Herstellung eines dreidimensionalen Gegenstandes aus verfestigbarem Material nach dem Oberbegriff der Ansprüche 1 und 3.

In der Kunststoffteileherstellung ist bekannt, durch Spritzgießen oder Extrudieren in großen Losgrößen und Serien Teile unter Verwendung von Formwerkzeugen herzustellen. Der Vorteil des Kunststoff-Spritzgießens beruht insbesondere auf der hochgenauen Herstellung von komplexen Teilgeometrien, wobei die Funktionsvielfalt des Spritzgießverfahrens in optimaler Weise die Anforderungen an eine kostengünstige und wirtschaftliche Produktion von Kunststoffteilen abdeckt.

Gleichzeitig wächst mehr und mehr ein Bedarf nach Kunststoffteilen für Stückzahl 1 und kleine Losgrößen, wie z.B. Musterteile mit der Anforderung einer sehr kurzzeitigen Bereitstellung sowie Eigenschaften, die denen von spritzgegossenen Teilen ähnlich sind. Zur Herstellung solcher Teile gibt es Fertigungsverfahren, die weitläufig unter dem Begriff Prototyping und Rapid Manufacturing bekannt sind. Die Herstellung solcher Teile beruht werkzeuglos, d.h. ohne Formwerkzeuge, in den meisten Fällen auf der Erzeugung der Geometrie aus 3D-Daten. Diese Geometrien werden in unterschiedlichster Form durch entsprechende Mittel wie Aufschmelzen von Pulverschichten durch Wärmeeintrag, z.B. mit Laser, generative Systeme wie Druckverfahren in unterschiedlicher verbindender Form der Pulverteile oder auch im sogenannten Schmelzstrangverfahren hergestellt.

Aus der dem Oberbegriff des Anspruches 1 zu Grunde liegenden EP 2 199 082 A1 ist ein Printverfahren zur schichtweisen Herstellung dreidimensionaler Gegenstände unter tropfenweiser Ausbringung eines flüssigen Materials bekannt. Unter einem stationären Druckkopf wird der zu erstellende Gegenstand bewegt, wobei Gegenstand und Druckkopf aufeinander ausgerichtet werden. Der Druckkopf ist vorzugsweise über dem Gegenstand angeordnet, so dass eine vertikale Ausbringung der Tropfen wahrscheinlich ist. Schicht um Schicht wird ausgehärtet und anschließend wird ein Profil schleifend herausgearbeitet und ausgehärtet wird.

Für die Herstellung dentalkeramischer Teile ist es aus der WO 2007/083372 A1 bekannt, eine keramische Dispersion tropfenweise auszutragen. Der Gegenstand wird während der Herstellung auf einem 5-achsigen Arm erstellt, mit dem Punkte im Raum nur teilweise abzudecken sind.

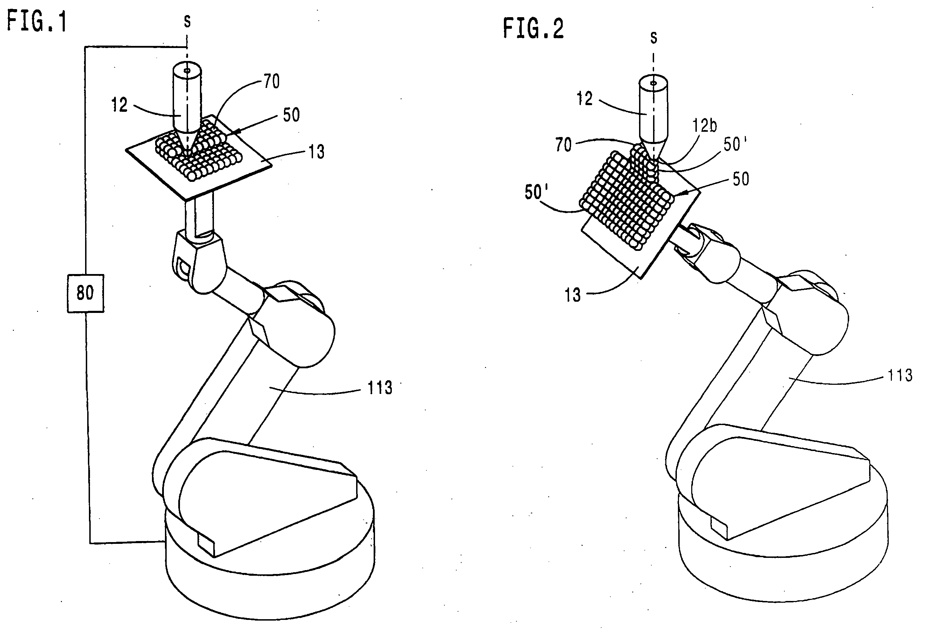

Aus der WO 2011/011818 A1 ist eine Vorrichtung bekannt, bei der zur Erzeugung eines Gegenstandes auf einen Objektträger Material mittels mehrere Austragseinheiten über eine Austragsöffnung in Form von Tropfen ausgetragen wird. Gemäß Fig. 1 und 16 jener Anmeldung ist eine Austragseinheit mit der Düse dafür bestimmt, das Material selbst auszutragen, während die andere eine Substanz austrägt, die später wieder entfernt werden kann, um dadurch Überhänge auszugestalten. Die in den Figuren dargestellten Lösungen sind jeweils so ausgebildet, dass in negativer Y-Richtung die Schwerkraft wirkt. Die vertikal stehende Scheibe kann um ihre Mittelachse rotieren und sich in Richtung der Z-Achse gemäß Fig. 1 ebenfalls bewegen, ist also dreidimensional bewegbar. Die Austragseinheit ist ebenfalls in verschiedenen Richtungen bewegbar, wobei hinsichtlich Figur 16 ein bestimmter Winkel zur Vertikalen von 75 bis 180 Grad für die Anordnung der Austragseinheit als Beispiel angegeben ist. damit lassen sich Überhänge am herzustellenden Gegenstand nicht gestalten.

Aus der US 7,168,935 B1 ist eine Vorrichtung zur Herstellung eines dreidimensionalen Gegenstands auf einem Mehrachsschlitten bekannt, der in den Koordinatenrichtungen x, y und z gesteuert bewegbar ist. Das dort aufgebrachte Material wird durch eine stationäre Elektronenstrahlkanone in einem Sinterprozess verfestigt.

Aus der EP 1 886 793 A1 ist eine Vorrichtung bekannt, bei der eine in der Spritzgießtechnik bekannte Plastifiziereinheit an einem unter Druck setzbarem Materialspeicher für die fluide Phase eines Materials angekoppelt wird. Zur Erzeugung eines Gegenstandes auf einen Objektträger in einem Bauraum wird dieses Material über eine Austragsöffnung in Form von Tropfen ausgetragen. Aufgrund der Adhäsionskräfte des Materials sind dafür ein hoher Druck und hohe Schmelztemperaturen für das Material erforderlich, zumal der Tropfen eine Größe von 0,01 bis 0,5 mm³ aufweisen soll. Die Adhäsionskräfte führen im Unterschied zu Verfahren unter Einsatz von Pulvern zu einem Haftvermögen der Tropfen. Bei der dortigen Vorrichtung sind bereits Steuermittel für den Objektträger für Bewegungen in x-, y-, als auch in z-Richtung relativ zur Austragseinheit vorgesehen. Dabei wird der Abstand zwischen Austragseinheit und Objektträger so gewählt, dass die Tropfen auf ihrer Flugbahn einen frei fliegenden Tropfen ausbilden können.

Ausgehend von diesem Stand der Technik liegt der vorliegenden Erfindung die Aufgabe zugrunde, ein Verfahren und eine Vorrichtung zur Herstellung eines dreidimensionalen Gegenstandes mit geometrischen Überhängen bzw. Hinterschnitten unter Verwendung verfestigbarer Materialien ohne zusätzliche Stützstrukturen zu schaffen.

Diese Aufgabe wird durch eine Vorrichtung mit den Merkmalen des Anspruches 1 sowie durch ein Verfahren mit den Merkmalen des Anspruches 3 gelöst.

In der Praxis hat sich herausgestellt, dass für die Herstellung von räumlichen Teilen wie Rapid-Prototyping-Teilen aus verfestigbarem Material, wie z.B. thermoplastischem Material, regelmäßig auch Überhänge bzw. Hinterschnitte abgebildet werden müssen. Unter Verwendung von flüssigen, verfestigbaren Materialien wie verflüssigten Kunststoffen oder dergleichen ist dies grundsätzlich auch ohne Stützstruktur möglich. Hierzu werden der Objektträger zum Aufbau des Gegenstandes und/oder der Gegenstand einerseits und die Austrittsöffnung andererseits so aufeinander ausgerichtet, dass dem Übergang des Materials zwischen flüssiger und fester Phase so Rechnung getragen werden kann, dass sich Stützstrukturen erübrigen, ganz im Gegensatz z.B. zu bekannten Pulverbett-Verfahren. Es kann also eine Bewegung des Bauteils und gegebenenfalls auch der Austragseinheit während des generativen, Form erzeugenden Aufbaus des Gegenstandes im Raum erfolgen, wobei die Achse der Austragseinheit, d.h. die Achse der Tropfenförderrichtung die Oberfläche des Objektträgers oder des bereits erstellten Gegenstandes schneidet. Dabei erfolgt eine Ausrichtung der Achse der Austragseinheit, entlang der die vorzugsweise diskontinuierlichen Tropfen erzeugt werden, auf in etwa einen rechten Winkel zu einer Tangente an die Oberfläche, an der der Tropfen angefügt werden soll. Da die einzelnen Tropfen auf die bereits aufgebaute Geometrie des Gegenstandes aufgetragen werden und sich mit ihr verbinden und dort verfestigen, kann durch dreidimensionale Bewegungen die bestehende Geometrie auf diese Richtung ausgerichtet werden, wobei diese Richtung auch in Richtung der Schwerkraft ist. Zudem werden der Objektträger und/oder der Gegenstand auf einer mehrachsigen Vorrichtung angeordnet und an einer 45°-Schräge über einen Drehmotor drehbar gelagert. Damit lassen sich aus formtechnischer Sicht beliebige Hinterschnitte herstellen.

Grundsätzlich besteht die Möglichkeit, die Austragseinheit zu verschwenken und dadurch in Kombination der Bewegung der Austragseinheit einerseits und der Bewegung des herzustellenden Gegenstandes andererseits weitere Ausgestaltungen vorzunehmen, wie z.B. eine bessere Eckausformung.

Vorzugsweise wird also der bisher bekannte Koordinatentisch durch eine Mehrachsgeometrie, wie z.B. einen 6-Achs-Kleinrobotor ersetzt, so dass neben dem kartesischen Koordinatensystem einer Basis das darauf angeordnete weitere mitlaufende Koordinatensystem z.B. des Bauteils zur Ansteuerung optimiert wird.

Andere Vorteile ergeben sich aus den Unteransprüchen und der nachfolgenden Beschreibung.

Im Folgenden wird die Erfindung anhand von in den Figuren dargestellten Ausführungsbeispielen näher erläutert. Es zeigen:
- Fig. 1: eine dreidimensionale Ansicht einer Vorrichtung mit Austragseinheit und einem auf einer Mehrachsgeometrie angeordneten Objektträger,
- Fig. 2, 3: die Vorrichtung gemäß Fig. 1 verschwenkt in verschiedene Stellungen zur Ausgestaltung von Überhängen eines herzustellenden Gegenstands,
- Fig. 4: eine Darstellung gemäß Fig. 3 in einer weiteren Ausführungsform der Erfindung,
- Fig. 5: eine Darstellung gemäß Fig. 3 mit schräg gestellter Austragseinheit,
- Fig. 6a bis 6d: eine schematische Ablaufdarstellung beim Aufbau eines Gegenstands,
- Fig. 7 bis 9: unterschiedliche Stellungen einer alternativen Mehrachsgeometrie zur Bewegung des Objektträgers.

### Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Die Figuren zeigen eine Vorrichtung zur Herstellung eines dreidimensionalen Gegenstandes 50 aus verfestigbarem Material, das entweder im Ausgangszustand in einer fluiden Phase vorliegt oder verflüssigt werden kann. Die Herstellung erfolgt durch sequenzielles Austragen von Tropfen durch eine Austragseinheit 12. Die Austragseinheit 12 ist lediglich schematisch dargestellt. Ihr Aufbau ist an sich aus der EP 1 886 793 A1 oder der DE 10 2009 030 099 A1 bekannt und wird hiermit durch Verweisung auf diese Schriften in Bezug genommen. Im Detail zeigen diese Schriften den Aufbau eines dreidimensionalen Gegenstandes 50 durch sequenzielles Austragen von Tropfen 70 aus der taktbaren Austragseinheit 12. Schicht für Schicht wird so der Gegenstand 50 auf dem Objektträger 13 durch die Tropfen 70 erstellt. Die Austragseinheit 12 steht mit einem Materialspeicher in Verbindung, dem über eine Druckerzeugungseinheit von einer Aufbereitungseinheit aufbereitetes Material unter Druck stehend zugeführt wird. Über die taktbare Austrittsöffnung 12 werden die Tropfen erzeugt und in einen Bauraum gefördert, in dem der Gegenstand 50 auf dem Objektträger 13, 13' aufgebaut wird. Vorzugsweise ist die Austragseinheit 12 Teil einer an sich in der Spritzgießtechnik dem Grundsatz nach bekannten Plastifiziereinheit, die zugleich auch den unter Druck setzbarem Materialspeicher zum Einbringen der fluiden Phase in den Materialspeicher umfasst. Der Druck auf die fluide Phase im Materialspeicher erzeugt in direkter Kopplung den Tropfen 70.

Da es für die Verwendung der Vorrichtung und auch für das Verfahren wesentlich ist, wird hier auch auf die Eigenschaft des Materials eingegangen. Das verfestigbare Material ist ein plastifiziertes Material wie zum Beispiel Silikon oder ein plastifizierbares Material wie Kunststoff oder auch pulverförmige Materialien, wobei es im Wesentlichen darauf ankommt, dass das verfestigbare Material entweder im Ausgangszustand in einer fluiden Phase vorliegt oder verflüssigt werden kann. Das Material kann auch ein unter Wärme reversibel aufschmelzbares und damit recycelbares Material sein. Beliebige andere Materialien können verwendet werden, sofern diese Materialien durch die Vorrichtung plastifizierbar und vor allem durch die wenigstens eine Austragseinheit 12 austragbar sind.

Das verfestigbare Material weist in der fluiden Phase einen sogenannten laminaren Quellfluss auf. In den Quellfluss geht u.a. die Anlagerung der Schmelze an der Wandung ein. Dies wird am deutlichsten bei einem Blick in die Erkenntnisse der Spritzgießtechnik. Bei der Formfüllung eines einfachen, rechteckigen Kanals wird die Schmelze über einen sogenannten Angusspunkt eingespritzt und beginnt sich von diesem Punkt mit geschlossenen Fließfronten kreisförmig auszubreiten, bis sie die gesamte Breite der Kavität ausfüllt. Einige Zeit danach kann der Bereich zwischen dem Einlauf und der Fließfront als nahezu ausgebildet betrachtet werden. An der Fließfront selbst herrscht eine besondere Strömungssituation, der "Quellfluss", da die Stromlinien in diesem Bereich wie eine Quelle erscheinen, wenn man sie in Bezug auf ein mitbewegtes Koordinatensystem betrachtet. Zwischen zwei den Kavitätsoberflächen nahe liegenden, rasch erstarrten Masseschichten fließt die Schmelze, wobei sie in der Mitte der Kavität mit größeren Geschwindigkeiten zur Fließfront hin schreitet. Kurz bevor die Schmelze die Fließfront erreicht, reduziert sich ihre Geschwindigkeitskomponente in Fließrichtung, sie fließt schräg zur Wand, bis sie sich an die Wand anlegt.

Der laminare Quellfluss ist für die Erzeugung von wie hier auf einen Bauraum ausgerichteten' Tropfen 70 auf Grund seiner laminaren Ausbildung einerseits von Vorteil, andererseits bestehen vor allem bei der Ausbildung kleiner Tropfen genau hier auch die Probleme, die eine Umsetzung mit aus der Spritzgießtechnik bekannten Einrichtungen und Materialien erschweren. Die Wandhaftung führt dazu, dass sich die Massen nur schwer zu Tropfen mit gewünschten kleinen Volumen, vorzugsweise im Bereich kleiner gleich 1 mm³ und gewünschter Fluggeschwindigkeit ausbilden lassen, andererseits ist eine entsprechend hohe Viskosität des Materials gerade für die Ausbildung einer geeigneten Tropfenform von Bedeutung.

Dies unterscheidet die verwendeten Materialien auch von den vorbekannten Wachsen. Aufgrund ihrer Viskosität lassen sich Wachse im normalen Thermodruck- oder Inkjetverfahren ausbringen, also durch reines kinematisches, druckloses Beschleunigen ohne Druckdifferenz des aufgeschmolzenen Tropfens. Die hier verwendeten Materialien unterscheiden sich hiervon bereits dadurch, dass ihre Viskositätszahl um eine bis mehrere Zehnerpotenzen höher ist. So liegt die dynamische Viskositätszahl des verfestigbaren Materials zwischen 100 und 10000 [Pa s], wobei vorzugsweise das verfestigbare Material ein in der Spritzgießtechnik üblicher Kunststoff oder ein Harz ist. Dies macht die Verarbeitung aus einem unter Druck setzbaren Materialspeicher erforderlich, da Drücke von mehr als 10 bis 100 MPa (100 bis 1000 bar) ohne weiteres erforderlich sind, insbesondere wenn zur Erzielung kleiner Tropfenvolumen kleine Austragsöffnungen eingesetzt werden.

Vorzugsweise liegt das gewünschte Volumen des Tropfens 70 insbesondere im Bereich von 0,01 bis 0,5 mm³, vorzugsweise im Bereich von 0,05 bis 0,3 mm³ und besonders vorzugsweise im Bereich von etwa 0,1 mm³. Der Durchmesser der Austrittsöffnung 12b ist insbesondere kleiner gleich 1 mm, vorzugsweise etwa 0,1 mm. Bei einer durchaus üblichen Einspritzgeschwindigkeit von 100 [cm/s], die durch einen sogenannten Punktanguss mit 0,1 [mm] Durchmesser die Masse fördert, ergibt sich mit Volumenstrom durch Fläche ein Wert von 10.000 [m/s]. Dies führt für die fluide Phase zu einem laminaren Quellfluss mit Fliessgeschwindigkeiten bis zu 10.000 m/s.

Die Vorrichtung hat mit ihrer Austragseinheit 12 die Aufgabe, hochviskose fluide Materialien, wie aufgeschmolzene Kunststoffe, in kleinsten Mengen bis hinunter zu wenigen Mikrogramm aus einem Materialspeicher auszutragen, der unter großem Druck und eventuell hoher Temperatur steht. Die kleinsten Mengen/Tropfen 70 des Materials werden in diskreten einzelnen Portionen ausgebracht, wobei deren Größe von der Vorrichtung beeinflussbar ist. Die ausgetragenen Portionen besitzen eine so hohe kinetische Energie, dass sie die Adhäsionskräfte überwinden können und von der Vorrichtung abheben und Tropfen 70 bilden, um auf dem Objektträger 13 den Gegenstand 50 aufzubauen.

Durch die Adhäsionskräfte des Materials ist es unter diesen Bedingungen möglich, durch geeignete Anordnung von Austragseinheit 12 einerseits und Objektträger 13, 13', 13" bzw. Gegenstand 50 andererseits beliebige Konturen abzubilden. Dazu können Steuermittel 80 gemäß Fig. 1 vorgesehen sein, die zur Steuerung der Bewegung des Objektträgers 13,13', 13" und/oder des Gegenstandes 50 einerseits und der Austrittsöffnung 12b andererseits geeignet sind. Die Bewegung dieser Elemente kann dann relativ zueinander im Raum erfolgen. Werden diese Elemente so an der Vorrichtung beweglich gelagert, können der Objektträger 13, 13', 13" oder der Gegenstand 50 und die Achse s der Austragseinheit 12 in beliebiger Richtung aufeinander ausgerichtet werden. Der fertige Gegenstand 50 weist in Draufsicht auf den Objektträger 13 Überhänge 50' auf. Diese entstehen dadurch, dass die Tropfen am Objektträger 13 und/oder am Gegenstand 50 als Hinterschnitte und Überhänge 50' anformbar sind.

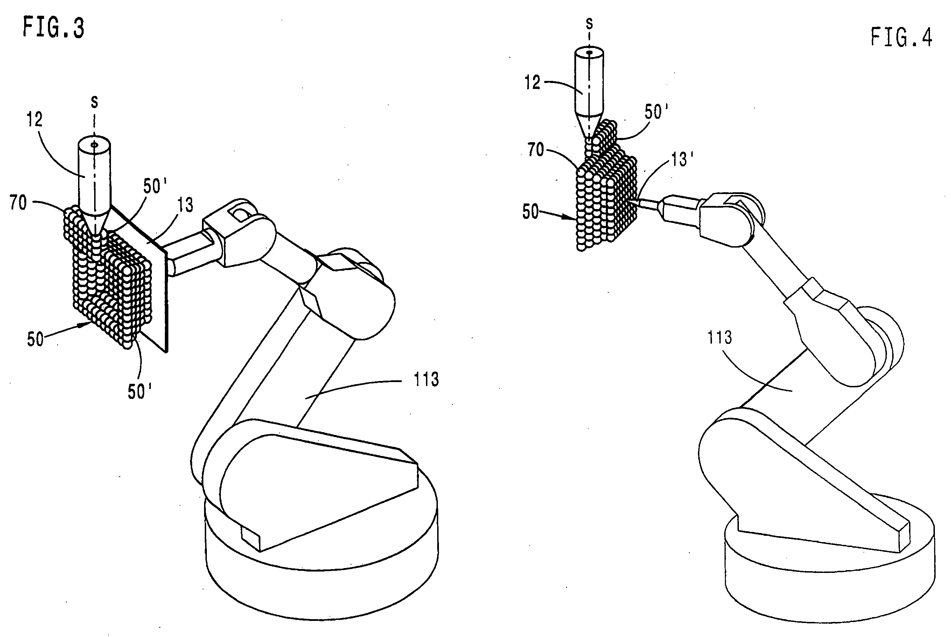

Die Fig. 1 bis 4 verdeutlichen, dass die Austragseinheit 12 grundsätzlich vertikal stehend angeordnet wird, während sich der Objektträger 13, gleich ob er als Trägerplatte wie in den Fig. 1 bis 3 oder als Ansatzpunkt als Objektträger 13' in Fig. 4 ausgebildet ist, relativ dazu bewegt. Wesentlich ist, dass durch geeignete Antriebseinheiten für Objektträger 13, 13', 13" und für die die Austrittsöffnung 12b tragende Austragseinheit 12 Mittel zum aufeinander Ausrichten des Objektträgers 13, 13', 13" und/oder des Gegenstands 50 einerseits und der Austrittsöffnung 12b andererseits gebildet werden. In der Regel und im bevorzugten Ausführungsbeispiel bleibt allerdings die Austrittsöffnung 12b vertikal und stationär stehen und der Objektträger 13, 13', 13" wird entsprechend bewegt.

Die Mittel zum Ausrichten sind durch die Steuermittel 80 ansteuerbar sind. Dabei wird die Achse s der Austragseinheit, also die Förderrichtung der Tropfen, relativ zum Objektträger und/oder dem Gegenstand im aufeinander ausgerichteten Zustand so ausgerichtet, dass sie eine Oberfläche des Objektträgers 13, 13', 13" oder des bereits erstellten Gegenstandes 50 schneidet. Vorzugsweise ergibt sich damit eine Anordnung der Achse s, in der diese etwa im rechten Winkel zu einer Tangentenfläche an diese Oberfläche, d.h. mathematisch normal zu dieser Oberfläche angeordnet ist. Diese Richtung der Achse ist parallel zur Schwerkraftrichtung.

Ein Vergleich zwischen Fig. 1 und Fig. 2 macht deutlich, dass z.B. die Austragseinheit 12 vertikal angeordnet werden kann, d.h. der Gegenstand 50 wird unter der Austragseinheit vorzugsweise relativ zur Austragseinheit 12 bewegt. Der Gegenstand 50 befindet sich auf dem Objektträger 13, der seinerseits auf einem 3D-Aktor 113 angeordnet ist, wie er auch für Roboter bekannt ist. Gemäß den Figuren 1 und 2 ist der Objektträger 13 und/oder der Gegenstand 50 auf einer Mehrachsgeometrie, vorzugsweise auf einem 6-Achs-Roboter angeordnet. Faktisch kann ein kartesischer Koordinatentisch durch ein räumliches 6-Achs-System ersetzt werden.

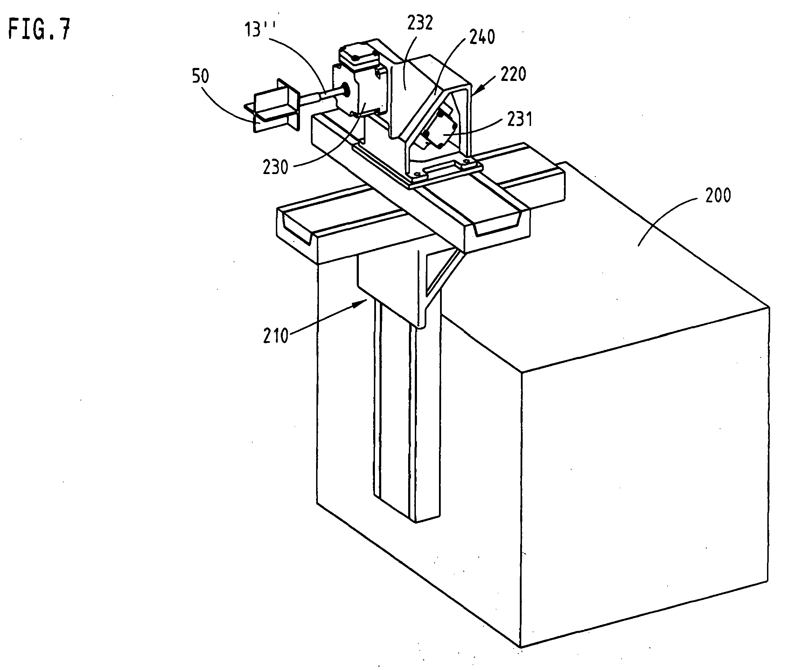

Die Fig. 7, 8, und 9 zeigen eine alternative Mehrachsgeometrie für den Objektträger 13" in drei unterschiedlichen Positionen. Auf einem Gestell 200 ist ein Koordinatentisch 210 angeordnet, der eine Bewegung eines den Objektträger 13" tragenden Drehtischs in drei Koordinatenrichtungen gestattet. Die Antriebe für die Bewegung der Schlitten des Koordinatentischs entlang den drei Koordinatenrichtungen sind der Einfachheit halber weggelassen. Am Drehtisch 220 ist an einer vorzugsweise 45°-Schräge 240 ein Winkeltisch 232 ebenfalls mit einer 45°-Schräge über einen Drehmotor 231 drehbar gelagert. Am Winkeltisch 232 ist der Objektträger 13" über den Drehmotor 230 drehbar gelagert. Durch Überlagerung der durch die Drehmotoren 230, 231 möglichen Bewegungen werden verschiedenste Positionen des Objektträgers 13"ansteuerbar, um Überhänge ohne Stützstruktur herzustellen.

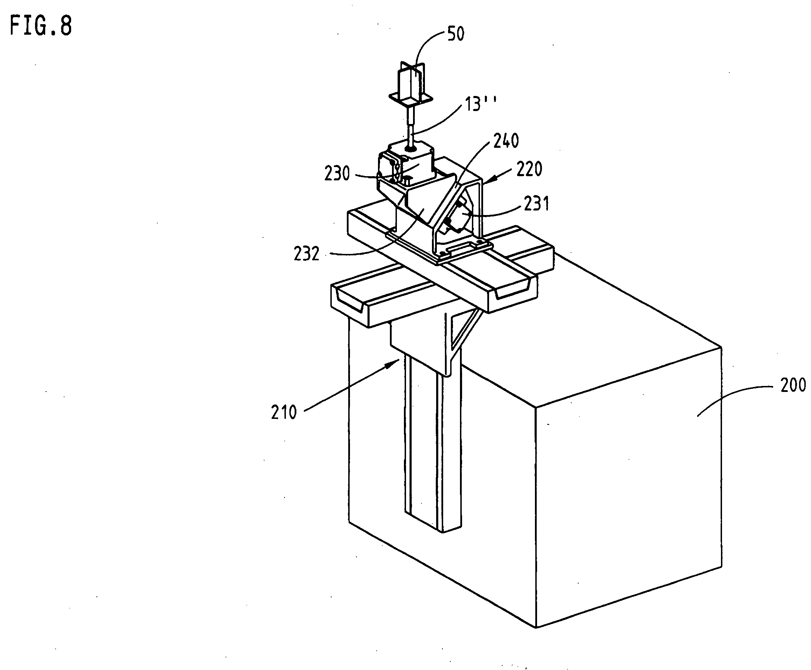

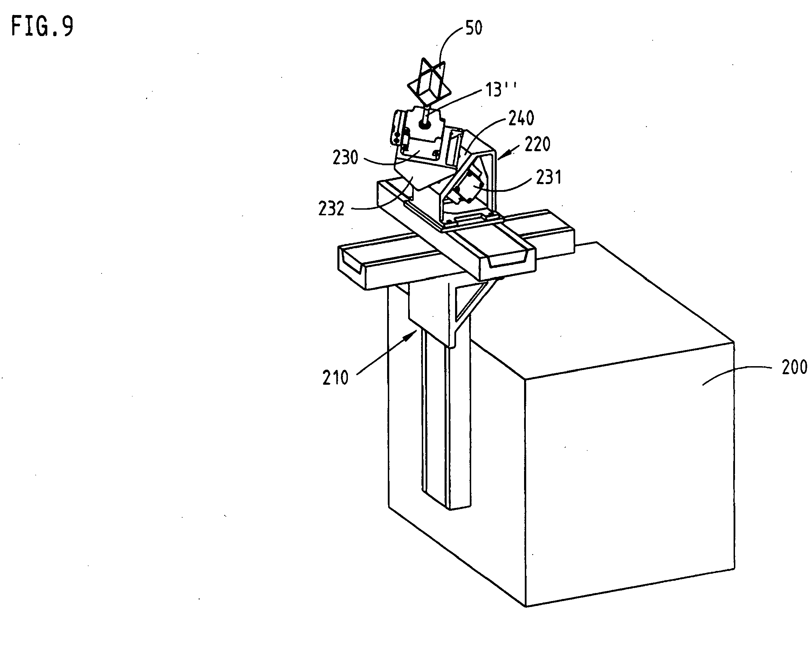

Mit dem Drehmotor 230 und dem Objektträger 13" kann der Gegenstand 50 unmittelbar rotieren, was z.B. für die Herstellung eines symmetrischen Hohlkörpers die Mittelachse sein kann. Mit dem Drehmotor 231 wird über die Schräge 240 der Gegenstand 50 mit dem Objektträger, 13" z.B. aus der horizontalen Stellung gemäß Fig. 7 in die vertikale Stellung gemäß Fig. 8 verschwenkt. Um unterschiedliche Winkel realisieren zu können ist jede erdenkliche Zwischenstellung möglich, wie z.B. in Fig. 9 dargestellt.

Somit ist durch die Erweiterung des Koordinatentischs 210 um den Drehtisch mit zwei Antriebseinheiten und der Drehbarkeit unter einem Winkel von 45° ein nahezu uneingeschränkter dreidimensionaler Gegenstand 50 mit Überhängen ohne Stützstruktur herstellbar.

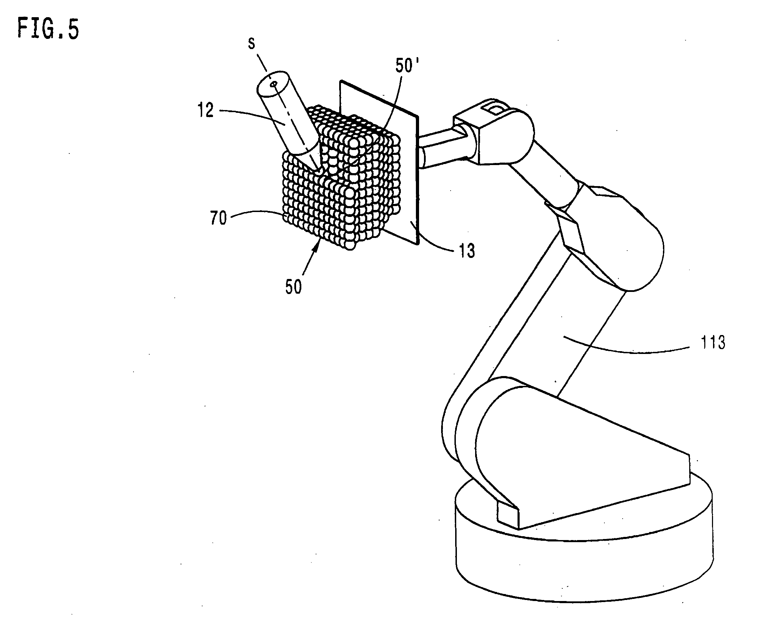

Eventuell vorhandene Überhänge 50' des Gegenstandes 50 können gemäß Fig. 2 bis 4 durch ein Ausrichten von Austragseinheit und Objektträger 13, 13' dadurch gebildet werden, dass ein Anformen an den Oberflächen von Objektträger oder Gegenstand erfolgt. Sie können aber gemäß Fig. 5 auch durch eine begrenzte Verschwenkung und entsprechende Ausrichtung der Austragseinheit 12 gebildet werden. Grundsätzlich ist eine Kombination dieser beiden Alternativen möglich, d.h. sowohl der Gegenstand 50 öder Objektträger 13 als auch die Austragseinheit 12 werden verschwenkt.

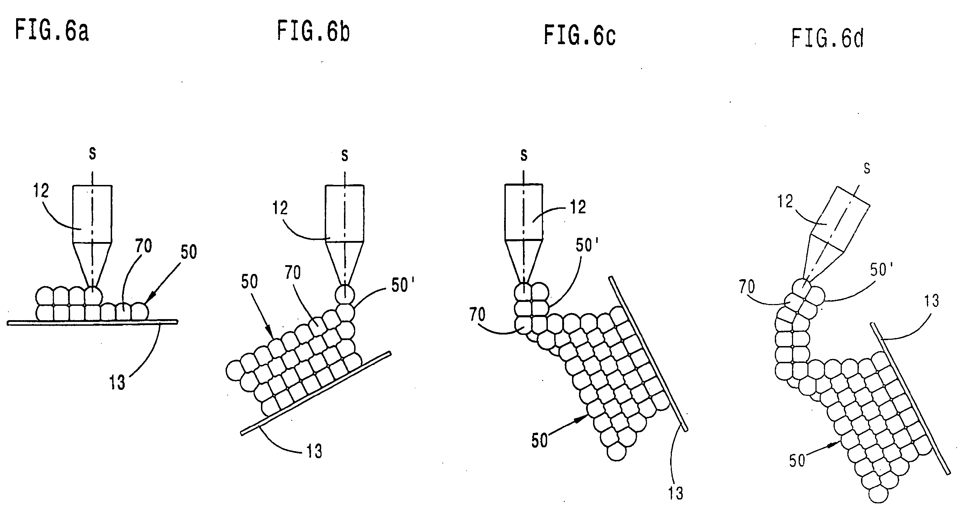

Die Vorrichtung arbeitet verfahrensgemäß wie folgt. Zunächst wird das verfestigbare Material zur Verfügung gestellt bzw. plastifiziert, damit es in einer fluiden Phase vorliegt, in der es in die taktbare Austragseinheit 12 eingebracht werden kann. Aus der Austrittsöffnung 12b der Austragseinheit 12 werden die Tropfen 70 entlang der Achse s in Richtung auf den Objektträger 13 ausgebracht, um den dreidimensionalen Gegenstand 50 herzustellen (Fig. 6a). Objektträger 13 und/oder Gegenstand 50 einerseits und Austrittsöffnung 12b andererseits werden dann relativ zueinander im Raum bewegt und aufeinander ausgerichtet. Diese Elemente werden beweglich positionsgesteuert gelagert und durch die Steuermittel 80 in ihre Position verbracht. Dann erfolgt ein Ausrichten von Objektträger 13, 13' und/oder Gegenstand 50 und Achse s aufeinander, wobei vorzugsweise der nächste Tropfen normal, d.h. im rechten Winkel zu einer Tangente an die bereits erstellte oder bestehende Oberfläche angesetzt wird (Fig. 6b). Diese Anordnung normal zur Fläche entspricht in etwa der Baurichtung des Gegenstands. Die Fig. 6a bis 6d machen dies anhand der Herstellung einer Tasse deutlich. Insbesondere die Fig. 6c und 6d zeigen, wie Austragseinheit 12 und Gegenstand 50 relativ aufeinander ausgerichtet werden können, um den nächsten Tropfen möglicht effektiv am bereits erstellten Gegenstand 50 anzusetzen, um dadurch die Überhänge 50' zu bilden. Dadurch können Tropfen am Gegenstand 50 als Überhänge 50' angefügt werden.

### Bezugszeichenliste

- 12: Austragseinheit
- 12b: Austrittsöffnung
- 13, 13', 13": Objektträger
- 50: Gegenstand
- 50': Überhänge am Gegenstand
- 70: Tropfen
- 80: Steuermittel
- 113: 3D-Aktor
- 200: Gestell
- 210: Koordinatentisch
- 220: Drehtisch Horizontal / Vertikal
- 230: Drehmotor Objektträger
- 231: Drehmotor Winkeltisch
- 232: Winkeltisch
- 240: 45°- Schräge
- s: Achse der Austragseinheit

## Patentansprüche

1. Vorrichtung zur Herstellung eines dreidimensionalen Gegenstandes (50) aus verfestigbarem Material, das entweder im Ausgangszustand in einer fluiden Phase vorliegt oder verflüssigt werden kann, durch sequenzielles Austragen von Tropfen (70) mit
- einem Objektträger (13, 13', 13") für den herzustellenden Gegenstand (50),
- mindestens einer Austragseinheit (12) mit einer Austrittsöffnung (12b) zum Austragen des verfestigbaren Materials in Form der Tropfen (70) entlang einer Achse (s) in Richtung des Objektträgers (13, 13', 13") zum Aufbau des Gegenstands (50),
- Steuermitteln (80) zur Steuerung der Bewegung des Objektträger (13, 13', 13") und/oder des Gegenstands (50) einerseits und der Austrittsöffnung (12b) andererseits relativ zueinander im Raum,
- Mitteln zum aufeinander Ausrichten des Objektträgers (13, 13', 13") und/oder des Gegenstands (50) einerseits und der Austrittsöffnung (12b) andererseits, die durch die Steuermittel (80) ansteuerbar sind, wobei die Achse (s) im aufeinander ausgerichteten Zustand eine Oberfläche des Objektträgers (13, 13', 13") oder des bereits erstellten Gegenstandes (50) schneidet,
**dadurch gekennzeichnet, dass** die Achse (s) im aufeinander ausgerichteten Zustand etwa im rechten Winkel zu einer Tangente an die Oberfläche und in Richtung der Schwerkraft angeordnet ist und dass der Objektträger (13, 13") und/oder der Gegenstand (50) auf einer mehrachsigen Vorrichtung angeordnet wird, die einen Winkeltisch (232) mit einer 45°-Schräge (240) aufweist, der auf einem Drehtisch (220) an einer 45°-Schräge über einen Drehmotor (231) drehbar gelagert ist.

2. Vorrichtung nach Anspruch 1, **dadurch gekennzeichnet, dass** im aufeinander ausgerichteten Zustand die Achse (s) zur Anformung von Überhängen (50') des am Objektträger (13, 13', 13") herzustellenden Gegenstands (50) ausgerichtet ist.

3. Verfahren zur Herstellung eines dreidimensionalen Gegenstandes (50) aus verfestigbarem Material, das entweder im Ausgangszustand als Fluid vorliegt oder verflüssigt werden kann, durch sequenzielles Austragen von Tropfen (70) mit den Schritten
- Zurverfügungstellen oder Plastifizieren des verfestigbaren Materials in der bzw. in die fluide Phase,
- Einbringen dieser fluiden Phase in eine taktbaren Austragseinheit (12),
- Austragen der Tropfen (70) aus einer Austrittsöffnung (12b) der Austragseinheit (12) entlang einer Achse (s) in Richtung auf einen Objektträger (13, 13', 13") für den herzustellenden dreidimensionalen Gegenstand (50), wobei Objektträger (13, 13', 13") und/oder Gegenstand (50) einerseits und Austrittsöffnung (12b) andererseits relativ zueinander im Raum bewegbar sind,
- positionsgesteuertes, aufeinander gerichtetes Ausrichten des Objektträgers (13, 13', 13") und/oder des Gegenstands (50) einerseits und der Austrittsöffnung (12b) andererseits,
- wobei die Achse (s) im aufeinander ausgerichteten Zustand eine Oberfläche des Objektträgers (13, 13', 13") oder des bereits erstellten Gegenstandes (50) schneidet,
**dadurch gekennzeichnet, dass** die Achse(s) im aufeinander ausgerichteten Zustand etwa im rechten Winkel zu einer Tangente an die Oberfläche angeordnet wird und das Austragen der Tropfen in Richtung der Schwerkraft erfolgt und dass der Objektträger (13, 13") und/oder der Gegenstand (50) auf einer mehrachsigen Vorrichtung angeordnet wird und mittels eines Winkeltischs (232) mit einer 45°-Schräge (240), die mit einer 45°-Schräge an einem Drehtisch (220) zusammenwirkt, über einen Drehmotor (231) drehbar ist.

4. Verfahren nach Anspruch 3, **dadurch gekennzeichnet, dass** die Achse (s) so ausgerichtet wird, dass die Tropfen am Objektträger (13, 13', 13") und/oder am Gegenstand (50) als Überhänge (50') angefügt werden.

## Claims

1. A device for the production of a three-dimensional object (50) from a solidifiable material, which is either present in its original state in a fluid phase or can be liquefied, by a sequential discharge of drops (70) with
- an object carrier (13, 13', 13") for the object (50) to be produced,
- at least one discharge unit (12) with an outlet orifice (12b) for discharging the solidifiable material in the form of drops (70) along an axis (s) in a direction towards the object carrier (13, 13', 13") in order to construct an object (50),
- control means (80) for controlling the motion of the object carrier (13, 13', 13") and/or the object (50), on the one hand, and the outlet orifice (12b), on the other hand, relative to each other in the space,
- means for mutually aligning of the object carrier (13, 13', 13") and/or the object (50), on the one hand, and the outlet orifice (12b), on the other hand, which can be controlled by the control means (80), with the axis (s) in the mutually aligned state intersecting a surface of the object carrier (13, 13', 13") or the object (50), which is already at least partially constructed,
**characterized in that** the axis (s) in the mutually aligned state is arranged approximately at a right angle in reference to a tangent to the surface and in the direction of gravity and that the object carrier (13, 13") and/or the object (50), is arranged on a multi-axis geometry comprising an angle table (232) with a 45°-incline (240), which angle table is pivotably mounted on a rotary table (220) at a 45° incline, rotatable by a rotary motor (231).

2. A device according to claim 1, **characterized in that** in the mutually aligned state the axis (s) is aligned to integrally form overhangs (50') of the object (50) to be produced on the object carrier (13, 13', 13").

3. A method for the production of a three-dimensional object (50) from a solidifiable material, which is either present as a fluid in the original state or can be liquefied, by a sequential discharge of drops (70) comprising the steps
- providing the solidifiable material in or plasticizing the solidifiable material into the fluid phase,
- inserting the fluid phase into a clockable discharge unit (12),
- discharging the drops (70) from an outlet orifice (12b) of the discharge unit (12) along an axis (s) in a direction towards an object carrier (13, 13', 13") for the three-dimensional object (50) to be produced, with the object carrier (13, 13', 13") and/or the object (50), on the one hand, and the outlet orifice (12b); on the other hand, being movable in space relative to each other,
- position-controlled, mutually aligning of the object carrier (13, 13', 13") and/or the object (50), on the one hand, and the outlet orifice (12b), on the other hand, wherein the axis (s) in a mutually aligned state intersecting a surface of the object carrier (13, 13', 13") or the object (50), which is already produced,
**characterized in that** the axis (s) in the mutually aligned state is arranged approximately at a right angle in reference to a tangent to the surface and the discharge of the drops occurs in a direction of gravity and that the object carrier (13, 13") and/or the object (50) is arranged on a multi-axis geometry and is rotatable by a rotary motor (231) by means of an angle table (232) comprising a 45°-incline (240), which is cooperating with a 45° incline on a rotary table (220.

4. A method according to claim 3, **characterized in that** the axis (s) is aligned such that the drops are added to the object carrier (13, 13', 13") or the object (50) as overhangs (50').

## Revendications

1. Dispositif pour la fabrication d'un objet tridimensionnel (50) à partir d'un matériau durcissable, qui se présente au départ sous la forme d'une phase fluide ou qui peut être fluidifié, par distribution séquentielle de gouttes (70), comportant :
- un support d'objet (13, 13', 13") pour l'objet à fabriquer (50),
- au moins une unité de distribution (12) ayant un orifice de sortie (12b) pour la distribution du matériau durcissable sous forme de gouttes (70) le long d'un axe (s) en direction du support d'objet (13, 13', 13") pour la construction de l'objet (50),
- des moyens de commande (80) pour la commande du déplacement du support d'objet (13, 13', 13") et/ou de l'objet (50) d'une part, et de l'orifice de sortie (12b) d'autre part, l'un ou les uns relativement à l'autre dans l'espace,
- des moyens d'alignement du support d'objet (13, 13', 13") et/ou de l'objet (50) d'une part, et de l'orifice de sortie (12b) d'autre part, l'un ou les uns avec l'autre, qui peuvent être commandés par les moyens de commande (80), l'axe (s) à l'état aligné coupant une surface du support d'objet (13, 13', 13") ou de l'objet (50) déjà fabriqué,
**caractérisé en ce que** l'axe (s) à l'état aligné est disposé à peu près à angle droit par rapport à une tangente à la surface et dans le sens de la force de pesanteur et **en ce que** le support d'objet (13, 13") et/ou l'objet (50) est/sont disposé(s) sur un dispositif à plusieurs axes qui présente une table angulaire (232) avec une inclinaison (240) de 45 degrés qui repose, en pouvant tourner, sur une table de rotation (220) inclinée à 45 degrés au-dessus d'un moteur d'entraînement en rotation (231).

2. Dispositif selon la revendication 1, **caractérisé en ce qu'**à l'état aligné, l'axe (s) est aligné pour la formation de porte-à-faux (50') de l'objet à fabriquer (50) sur le support d'objet (13, 13', 13").

3. Procédé de fabrication d'un objet tridimensionnel (50) à partir d'un matériau durcissable qui se présente au départ sous la forme d'un fluide ou qui peut être fluidifié, par distribution séquentielle de gouttes (70), comportant les étapes suivantes :
- mise à disposition du matériau durcissable sous forme de phase fluide ou fluidisation du matériau durcissable en une phase fluide,
- introduction de la phase fluide dans une unité de distribution (12) cadençable,
- distribution des gouttes (70) à travers un orifice de sortie (12) de l'unité de distribution (12) le long d'un axe (s) en direction d'un support d'objet (13, 13', 13") pour l'objet tridimensionnel (50) à fabriquer, le support d'objet (13, 13', 13") et/ou l'objet (50) d'une part, et l'orifice de sortie (12) d'autre part, étant déplaçables l'un ou les uns par rapport à l'autre dans l'espace,
- alignement commandé en position et les uns par rapport aux autres, du support d'objet (13, 13', 13") et/ou de l'objet (50) d'une part, et de l'orifice de sortie (12b) d'autre part,
- l'axe (s) à l'état aligné coupant une surface du support d'objet (13, 13', 13") ou de l'objet déjà fabriqué (50),
**caractérisé en ce que** l'axe (s) est disposé à l'état aligné à peu près à angle droit par rapport à une tangente à la surface et la distribution des gouttes se produit dans le sens de la force de pesanteur et **en ce que** le support d'objet (13, 13") et/ou l'objet (50) est/sont disposé(s) sur un dispositif à plusieurs axes et est/sont tournant(s) au moyen d'un moteur d'entraînement en rotation (231) grâce à une table angulaire (232) ayant une inclinaison (240) de 45 degrés qui coopère avec une inclinaison de 45 degrés d'une table de rotation (220).

4. Procédé selon la revendication 3, **caractérisé en ce que** l'axe (s) est aligné de telle sorte que les gouttes soient ajoutées sur le support d'objet (13, 13', 13") et/ou l'objet (50) en porte-à-faux (50').
